# EUROPÄISCHE PATENTSCHRIFT

(11) **EP 2 825 702 B1**
(45) Veröffentlichungstag und Bekanntmachung des Hinweises auf die Patenterteilung: **18.05.2016**
(21) Anmeldenummer: 13711288.4
(22) Anmeldetag: 08.03.2013
(51) Int. Cl.: E01C 19/23, E02D 3/026

(54) **ABSTREIFVORRICHTUNG FÜR EINE BODENVERDICHTUNGSWALZE UND BODENVERDICHTUNGSWALZE, INSBESONDERE GRABENWALZE**
CLEANING SCRAPER DEVICE FOR A SOIL COMPACTION ROLLER AND SOIL COMPACTION ROLLER, IN PARTICULAR TRENCH ROLLER
DISPOSITIF DE RACLAGE POUR UN ROULEAU DE COMPACTAGE DE SOL ET ROULEAUX DE COMPACTAGE DE SOL, NOTAMMENT ROULEAUX POUR TRANCHÉES

(30) Priorität: 14.03.2012 DE 102012005112
(43) Veröffentlichungstag der Anmeldung: 21.01.2015
(73) Patentinhaber: BOMAG GmbH, 56154 Boppard (DE)
(72) Erfinder: DYKHNICH, Alexander, 56564 Neuwied (DE)
(74) Vertreter: Lang, Friedrich
(86) Internationale Anmeldenummer: PCT/EP2013/000685
(87) Internationale Veröffentlichungsnummer: WO 2013/135357

(56) Entgegenhaltungen:
- EP-A2- 1 520 935
- DE-A1- 19 539 542

## Beschreibung

Die Erfindung betrifft eine Abstreifvorrichtung für eine Bodenverdichtungswalze und eine Bodenverdichtungswalze, insbesondere Grabenwalze, mit einer Abstreifvorrichtung.

Bekannte Bodenverdichtungswalzen oder Bodeverdichtungsmaschinen weisen am Umfang einer drehbar gelagerten Bandage eine Vielzahl üblicherweise in parallelen Reihen angeordneten Vorsprüngen, auch Stampffüße genannt, auf. Bei Bandagen mit Vorsprüngen tritt das Problem auf, dass auf der Bandage zwischen den Vorsprüngen und den Zwischenräumen der Vorsprünge Bodenmaterial anhaftet und dadurch die Leistung der Bandage verschlechtert wird. Es ist bekannt, quer zur Bandgagendrehrichtung eine Abstreifvorrichtung mit Abstreifzähnen anzubringen, so dass die Abstreifzähne in die Zwischenräume der Vorsprünge ragen und bei Rotation der Bandage Schmutz in den Zwischenräumen der Vorsprünge mechanisch entfernen. Eine solche Vorrichtung ist von der Druckschrift EP 1520935A2 bekannt.

Von unerwünschten Schmutzablagerungen sind somit Maschinenteile, beispielsweise Bandagen und Räder betroffen. Die Breite der rotierenden Maschinenteile kann unterschiedlich sein, so dass es erforderlich ist, eine Abstreifvorrichtung entsprechend der geänderten Breite anzupassen. Dies ist beispielsweise der Fall, wenn Bandagenverbreiterungen verwendet werden.

Derzeit werden für unterschiedliche Arbeitsbreiten der rotierenden Maschinenteile austauschbare Abstreifer in verschiedenen Breiten bereitgestellt. Hierbei ist es erforderlich, dass zumindest Teile der Abstreifvorrichtung ausgetauscht werden. Demzufolge ist es notwendig, dass separate Teile der Abstreifervorrichtung für verschiedene Arbeitsbreiten vorgehalten werden müssen. Auch ist der Austausch von Teilen für verschiedene Arbeitsbreiten oft zeitaufwändig.

Der Erfindung liegt daher die Aufgabe zu Grunde, eine Abstreifvorrichtung und eine Bodenverdichtungswalze mit einer Abstreifvorrichtung anzugeben, die diese beschriebenen Nachteile überwindet und bei unterschiedlichen Arbeitsbreiten eingesetzt werden kann.

Die Aufgabe wird mit einer Abstreifvorrichtung für eine Bandage einer Bodenverdichtungswalze gelöst, wobei die Abstreifvorrichtung einen ersten Abstreifkörper aufweist, der an einer Bandagenoberfläche angeordnet ist. Hierbei weist die Bandagenoberfläche Vorsprünge auf, die am Umfang der Bandagenoberfläche angeordnet sind, wobei eine Bandagenverbreiterung an der Bandage befestigbar ist. Ferner ist vorgesehen, dass die Abstreifvorrichtung einen zweiten Abstreifkörper aufweist, der axial verschiebbar auf dem ersten Abstreifkörper angeordnet ist, wobei der zweite Abstreifköper mit mindestens einem Befestigungsmittel auf dem ersten Abstreifkörper fixierbar ist. Die Abstreifvorrichtung kann für eine Bandage einer Bodenverdichterwalze, insbesondere für eine Bandage eine Grabenwalze verwendet werden. Ferner wird die Aufgabe mit einer Bodenverdichtungswalze, insbesondere einer Grabenwalze, gelöst, die eine erfindungsgemäße Abstreifvorrichtung aufweist. Bevorzugte Ausführungsformen sind in den Unteransprüchen beschrieben.

Die erfindungsgemäße Abstreifvorrichtung weist einen ersten Abstreifkörper und einen zweiten Abstreifköper auf. Hierbei ist vorgesehen, dass der erste Abstreifkörper an einer Bandagenoberfläche, die Vorsprünge aufweist, angeordnet ist. Ferner ist eine Bandagenverbreiterung an der Bandagenoberfläche befestigbar. Es ist vorgesehen, dass der zweite Abstreifkörper axial verschiebbar auf dem ersten Abstreifkörper angeordnet ist, wobei der zweite Abstreifköper mit mindestens einem Befestigungsmittel auf dem ersten Abstreifkörper fixierbar ist.

Die Breite des Arbeitsbereiches einer Bandage kann durch die Verwendung von zwei aufeinander liegenden und miteinander durch eine lösbare Verbindung, beispielsweise durch Schrauben oder Klemmen, befestigten Abstreifkörpern variiert werden. Je nach Bedarf kann die Verbindung gelöst werden und die erforderliche Arbeitsbreite zur Reinigung der Bandage eingestellt werden. Hierbei ist es nicht erforderlich, dass Teile der Abstreifvorrichtung ausgetauscht werden, da die erfindungsgemäße Abstreifvorrichtung permanent an der Bandage angeordnet sein kann und in Abhängigkeit der Arbeitsbreite der Bandage verstellbar ist.

Von Vorteil ist die Verwendung eines zweiten verlagerbaren Abstreifkörpers, da ein Verschieben des zweiten Abstreifkörpers einfacher zu bewerkstelligen ist als der Austausch der gesamten Abstreifvorrichtung oder Teile hiervon. Es muss bei dem Verschieben des zweiten Abstreifkörpers nicht auf die Stellung der Vorsprünge der Bandage geachtet werden, da durch das Lösen der Verbindung an der Abstreifvorrichtung weiterhin der erste Abstreifkörper mit dem zweiten Abstreifkörper verbunden sein kann und im gelösten Zustand über einen oder mehrere Vorsprünge geschoben werden kann.

Es kann vorgesehen werden, dass der erste Abstreifkörper und zweite Abstreifkörper formschlüssig aneinander befestigt werden. Eine Formschlüssigkeit der Verbindung ist dabei zweckmäßigerweise so ausgebildet, dass die beiden Abstreifkörper nur in einer einzigen Orientierung zueinander verbunden werden können. Auf diese Weise werden Fehlanordnungen bei der Erstmontage des zweiten Abstreifkörpers verhindert, beispielsweise bei einer Nachrüstung einer herkömmlichen Abstreifvorrichtung.

Gemäß einem Ausführungsbeispiel der Erfindung kann vorgesehen werden, dass mindestens ein Befestigungsmittel, beispielsweise eine Schraube durch den zweiten Abstreifkörper hindurch in den ersten Abstreifköper eingreift. Der erste Abstreifkörper und der zweite Abstreifkörper können hierfür Öffnungen aufweisen, beispielsweise Rundöffnungen oder Langöffnungen. Rundöffnungen haben den Vorteil, dass eine Positionierung des zweiten Abstreifkörpers an vorgegebener Stelle stattfinden kann. Der erste Abstreifkörper stellt eine korrespondierende Öffnung bereit, so dass der erste und der zweite Abstreifkörper in einer ersten Position eine erste Arbeitsbreite bereitstellen und in einer zweiten Position eine zweite Arbeitsbreite bereitstellen.

Bei der Verwendung von Langöffnungen oder Langlöchern kann durch die Länge der Öffnung ein Anschlag zur Fixierung bereitgestellt werden, wobei auch frei wählbare Zwischenpositionen in Bezug auf den zweiten Abstreifkörper möglich sind. Eine stufenlose Einstellbarkeit ist vorteilhaft, da Bandagenverbreiterungen unterschiedlicher Abmessungen berücksichtigt werden können, ohne dass zuvor die Arbeitsbreite bekannt sein muss.

Auch ist von Vorteil, dass bei einer Veränderung der Arbeitsbreite keine weiteren Elemente montiert oder demontiert werden müssen. Es ist lediglich notwendig, die vorgesehenen vorgesehen Befestigungsmittel zu lösen, um eine Abstreifervorrichtung für unterschiedliche Arbeitsbreiten bereitzustellen. Auch entsteht keine Verlustgefahr von Teilen, da alle Elemente der Abstreifervorrichtung an der Arbeitsmaschine im montierten Zustand verbleiben. Ferner ist die erfindungsgemäße Abstreifvorrichtung benutzerfreundlich, da eine einfache Verstellung auf eine beliebige Arbeitsbreite möglich ist.

In einer Ausführungsform der Erfindung kann vorgesehen sein, dass der erste Abstreifkörper einen ersten Schenkel und einen zweiten Schenkel aufweist und dass der zweite Abstreifkörper einen dritten Schenkel und einen vierten Schenkel aufweist, wobei der dritte Schenkel auf dem ersten Schenkel aufliegt und der vierte Schenkel auf dem zweiten Schenkel aufliegt.

Eine solche Geometrie die mit den Schenkeln der Abstreifkörper jeweils ein Dreieck aufspannt, ist unempfindlich gegen äußere Einflüsse. Die Dreiecksform kann technisch genutzt werden, um den mit den Abstreifzähnen aufgefangenen Schmutz von der Bandage wegzuleiten. Hierbei können die Schenkel gleiche Längen aufweisen, so dass die Abstreifvorrichtung unabhängig von der Drehrichtung der Bandage gleiche Wirkung entfaltet.

Gemäß einem Ausführungsbeispiel der vorliegenden Erfindung kann vorgesehen werden, dass der erste Schenkel und der zweite Schenkel des ersten Abstreifkörpers mit dem dritten Schenkel und dem vierten Schenkel des zweiten Abstreifkörpers eine Führungsgeometrie bilden. Es sind somit keine weiteren Elemente notwendig, um den zweiten Abstreifkörper auf dem ersten Abstreifkörper in eine vordefinierte Richtung entlang des ersten Abstreifkörpers zu bewegen.

Ferner kann vorgesehen werden, dass der erste Schenkel und der zweite Schenkel des ersten Abstreifkörpers eine erste identische Geometrie aufweisen und der dritte Schenkel und der vierte Schenkel des zweiten Abstreifkörpers eine zweite identische Geometrie aufweisen. Auf diese Weise weist der erste Abstreifkörper eine identisch geformte Vorder- und Rückseite auf. Dies gilt bei identischer zweiter Geometrie ebenfalls für die Vorder- und Rückseite des zweiten Abstreifkörpers. Ferner kann vorgesehen sein, dass die erste Geometrie und die zweite Geometrie zumindest in ihrer äußeren Form deckungsgleich sind. So kann beispielsweise in einer übereinander angeordneten Position der beiden Abstreifkörper platzsparend der zweite Abstreifköper an dem ersten Abstreifköper aufgesetzt sein, ohne dass die Funktionsweise des ersten Abstreifkörpers herabgesetzt wird.

Ferner wird erfindungsgemäß eine Bodenverdichtungsmaschine oder Bodenverdichtungswalze vorgesehen, die mindestens eine erfindungsgemäße Bandage aufweist. Hierbei kann die Bodenverdichtungsmaschine beispielsweise eine Arbeitsbreite der Bandage bei montierter Bandagenverbreiterung von etwa 610 mm oder etwa 850 mm aufweisen. Die Bodenverdichtungsmaschine ist vorzugsweise eine Grabenwalze.

Die Erfindung lässt sich entsprechend auch auf weitere Walzenarten, Bandagen und Räder von Arbeitsmaschinen anwenden.

Nachfolgend wird die Erfindung anhand von Ausführungsbeispielen näher erläutert. Die Erfindung ist jedoch nicht auf diese Ausführungsbeispiele beschränkt, so dass auch weitere Kombinationen und Anwendungen möglich sind. In den Zeichnungen zeigen schematisch:
- Fig. 1: ein erstes Ausführungsbeispiel einer Bandage mit einer Abstreifvorrichtung in teilweiser Explosionsansicht;
- Fig. 2: das erste Ausführungsbeispiel aus Fig. 1 mit montierter Bandagenverbreiterung;
- Fig. 3: das erste Ausführungsbeispiel aus Fig. 1 mit demontierter Bandagenverbreiterung;
- Fig. 4: ein zweites Ausführungsbeispiels einer Bandage mit einer Abstreifvorrichtung in teilweiser Explosionsansicht;
- Fig. 5: das zweite Ausführungsbeispiel der Fig. 4 mit montierter Bandagenverbreiterung;
- Fig. 6: das zweite Ausführungsbeispiel der Fig. 4 mit demontierter Bandagenverbreiterung;
- Fig. 7: ein drittes Ausführungsbeispiels einer Bandage mit einer Abstreifvorrichtung in teilweiser Explosionsansicht;
- Fig. 8: das dritte Ausführungsbeispiel der Fig. 7 mit montierter Bandagenverbreiterung;
- Fig. 9: das dritte Ausführungsbeispiel der Fig. 7 mit demontierter Bandagenverbreiterung;
- Fig. 10: ein viertes Ausführungsbeispiels einer Bandage mit einer Abstreifvorrichtung in teilweiser Explosionsansicht;
- Fig. 11: das vierte Ausführungsbeispiel der Fig. 10 mit montierter Bandagenverbreiterung; und
- Fig. 12: das vierte Ausführungsbeispiel der Fig. 10 mit demontierter Bandagenverbreiterung.

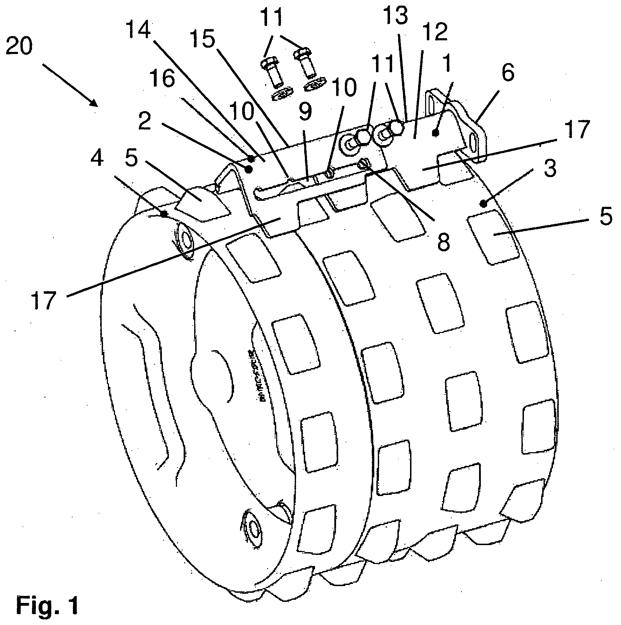

Fig. 1 zeigt ein erstes Ausführungsbeispiel einer Bandage 20 mit einer Absteifvorrichtung, die einen ersten Abstreifköper 1 und einen zweiten Abstreifkörper 2 aufweist. In Fig. 1 stellt die Bandage 20 eine erste Hälfte einer Bandagenanordnung für eine Grabenwalze dar. Bei Grabenwalzen werden geteilte Bandagen 20 eingesetzt, so dass eine zweite Hälfte der Bandage 20, die in Fig. 1 nicht gezeigt ist, spiegelbildlich an der Grabenwalze befestigt ist. Insgesamt weist die Grabenwalze eine vordere und eine hintere Bandage 20 mit jeweils zwei Hälften auf, wobei die Bandage 20 der Fig. 1 sowohl Teil einer vorderen wie auch Teil einer hinteren Bandage 20 sein kann. Die Bandage 20 ist mit einer Bandagenverbreiterung 4 von einer ersten Arbeitsbreite in eine zweite Arbeitsbreite veränderbar.

Fig. 1 zeigt die montierte Bandagenverbreiterung 4 an der Bandage 20. Die Bandage 20 wie auch die Bandagenverbreiterung 4 weist Stampffüße in Form von Vorsprüngen 5 auf. Die Vorsprünge 5 sind am Umfang einer Bandagenoberfläche 3 gleichmäßig verteilt angeordnet und bilden versetzte Reihen am Umfang der Bandage 20. Die Bandagenverbreiterung 4 weist an ihrem Umfang ebenfalls Vorsprünge 5 auf, die als Reihe am Umfang mit Zwischenräumen ausgebildet sind. Die Bandage 20 weist Vorsprünge 5 in drei Reihen auf, wobei die Positionen der Vorsprünge 5 der mittleren Reihe mit Positionen der Vorsprünge 5 der Bandagenverbreiterung 4 übereinstimmen.

Oberhalb der Bandage 20 in axialer Richtung quer zur Laufrichtung der Bandage 20 ist der erste Abstreifkörper 1 angeordnet. Der erste Abstreifköper 1 ist an einem feststehenden Teil in Form eines Flansches 6 der Bodenverdichtungsmaschine, auch Bodenverdichtungswalze genannt, befestigt. Der zweite Abstreifkörper 2 ist axial verschiebbar auf dem ersten Abstreifkörper 1 angeordnet, wobei der zweite Abstreifköper 2 mit mindestens einem Befestigungsmittel 11 auf dem ersten Abstreifkörper 1 fixierbar ist. Der zweite Abstreifkörper 2 verlängert den ersten Abstreifkörper 1 bei montierter Bandagenverbreiterung 4. Die Verlängerung des ersten Abstreifkörpers 1 durch den zweiten Abstreifköper 2 kann im Stillstand der Bandage 20 nach der Montage der Bandagenverbreiterung 4 an der Bandage 20 erfolgen. Der zweite Abstreifkörper 2 kann permanent an der Bandage 20 montiert sein und bei Bedarf von seiner inneren Ausgangsposition in eine äußere Position der Fig. 1 oder Arbeitsposition verschoben werden.

Beispielsweise weist der erste Abstreifkörper 1 eine Länge von etwa 20 cm bis etwa 30 cm auf. Beispielsweise weist der zweite Abstreifkörper eine Länge von etwa 20 cm bis etwa 30 cm auf. Vorzugsweise weist der erste Abstreifkörper 1 die gleiche Länge wie der zweite Abstreifkörper 2 auf. Vorzugsweise überschneiden sich der erste Abstreifkörper 1 und der zweite Abstreifkörper 2 in einem Bereich von etwa 10 cm während der Reinigungsposition des zweiten Abstreifkörpers 2.

Der erste Abstreifkörper 1 weist einen ersten Schenkel 12 und einen zweiten Schenkel 13 auf. Der zweite Abstreifkörper 2 weist einen dritten Schenkel 14 und einen vierten Schenkel 15 auf, wobei der dritte Schenkel 14 auf dem ersten Schenkel 12 aufliegt und der vierte Schenkel 15 auf dem zweiten Schenkel 13 aufliegt. Der erste Abstreifköper 1 und der zweite Abstreifkörper 2 weisen jeweils ein L-Profil auf, wobei das L-Profil aus jeweils zwei Schenkeln 12, 13, 14, 15 gebildet wird. Die beiden L-Profile sind aufeinander angeordnet und sind relativ zueinander verschiebbar gelagert. Der erste Absteifkörper 1 ist hierbei fixiert am Flansch 6 angeordnet. Der zweite Abstreifköper 2 ist beweglich auf einer vom zweiten Abstreifkörper 2 gebildeten Schiene in Form einer Biegelinie des L-Profils gelagert. Der erste Abstreifköper 1 wie auch der zweite Abstreifkörper 2 ist jeweils einstückig ausgebildet, beispielsweise durch Herstellung aus Metall mit einer Biegekante.

In Fig. 1 spannen die beiden Abstreifköper 1, 2 mit jeweils ihren beiden Schenkeln 12, 13, 14, 15 einen dreiecksförmigen Hohlraum unterhalb der Abstreifkörper 1, 2 auf, so dass eine obere Spitze des Dreiecks als Führungsgeometrie 16 oder Führungsschiene verwendet werden kann, um den zweiten Abstreifköper 2 auf dem ersten Abstreifkörper 1 zu verschieben. Die Spitze des Dreiecks schließt beispielsweise einen Öffnungswinkel von etwa 60 bis etwa 120 Grad auf.

In Fig. 1 weisen die beiden Schenkel 12, 13 des ersten Abstreifkörpers 1 eine erste gleiche Schenkellänge auf, beispielsweise 10 cm. Ferner weisen die beiden Schenkel 14, 15 des zweiten Abstreifkörpers 2 eine zweite gleiche Schenkellänge auf. Die erste Schenkellänge des ersten Abstreifkörpers 1 ist nahezu gleich der zweiten Schenkellänge des zweiten Abstreifkörpers 2. Auf diese Weise bildet sich unterhalb des ersten und zweiten Abstreifkörpers 1, 2 ein dreiecksförmiger Querschnitt der Abstreifvorrichtung, der ein gleichschenkliges Dreieck als Querschnitt aufweist.

In Fig. 1 weist der erste Abstreifkörper 1 und der zweite Abstreifkörper 2 Abstreifzähne 17 auf, die die Seiten der Schenkel 12, 13, 14, 15 jeweils verlängern. Der erste Abstreifkörper 1 weist an jedem Schenkel 12, 13 zwei Abstreifzähne 17 auf. Der zweite Abstreifkörper 2 weist an jedem Schenkel 14, 15 einen Abstreifzahn 17 auf. Die Abstreifzähne 17 am zweiten Abstreifkörper 2 können hierbei geometrisch so bemessen werden, dass durch die Positionierung des zweiten Abstreifkörpers 2 in seiner Arbeitsposition die Abstreifzähne 17 des ersten Abstreifkörpers 1 und des zweiten Abstreifkörpers 2 den gleichen Abstand zueinander aufweisen.

Es ist vorgesehen, dass der erste Abstreifkörper 1 oberhalb der Bandagenoberfläche 3 so fixiert ist, dass die Abstreifzähne 17 in den Zwischenräumen der Vorsprünge 5 an der Bandagenoberfläche 3 Schmutzablagerungen entfernen können. Der zweite Abstreifkörper 2 ist beweglich verschiebbar oberhalb des ersten Abstreifkörpers 1 gelagert und kann in einer Arbeitsposition zum Entfernen von Schmutzablagerungen auf der Bandagenverbreiterung 4 verwendet werden. Da sich die Bandage 20 und die montierte Bandagenverbreiterung 4 gleichzeitig mit gleicher Winkelgeschwindigkeit bei Antrieb der Bandage 20 bewegen, können sowohl Verunreinigungen auf der Bandagenoberfläche 3 wie auch auf der Bandagenverbreiterung 4 gleichzeitig entfernt werden. Fig. 1 zeigt eine solche Arbeitsposition bei der der zweite Abstreifkörper 2 von seiner Ausgangsposition in eine Arbeitsposition bei verbreiterter Bandage 3 verlagert wurde.

In Fig. 1 überdeckt der zweite Abstreifkörper 2 den ersten Abstreifköper 1 teilweise, so dass die beiden Abstreifkörper 1, 2 miteinander mit mindestens einem Befestigungsmittel 11, beispielsweise eines Stifts oder einer Schraube verbindbar sind. In Fig. 1 sind vier zu montierende Schrauben 11 mit jeweils einer Unterlegscheibe in Explosionsansicht gezeigt.

In Fig. 1 weist der erste Abstreifkörper 1 an jedem Schenkel 12, 13 zwei Öffnungen in Form von Rundöffnungen 8 auf. Der erste Abstreifkörper 2 weist an jedem Schenkel eine Öffnung in Form einer Langöffnung 9 auf, wobei die Langöffnung 9 vier Positioniernuten 10 aufweist. Die Positioniernuten 10 decken sich in der Arbeitsposition des zweiten Abstreifkörpers 2 mit den beiden Rundöffnungen 8 des ersten Abstreifkörpers 1. Die Schrauben 11 greifen jeweils durch den zweiten Abstreifkörper 2 hindurch in die Rundöffnungen 8 des ersten Abstreifköper 1 ein. Die Rundöffnungen 8 sind jeweils mit einem Innengewinde versehen, so dass ein Außengewinde einer Schraube 11 jeweils in das Innengewinde eingreifen kann. Durch die Verwendung eines Innengewindes in den Rundöffnungen 8 am ersten Abstreifkörper 1 kann jeweils auf ein weiteres Befestigungsmittel, beispielsweise auf eine Schraubenmutter zur Fixierung des Befestigungsmittels 11, verzichtet werden. Das Innengewinde kann auch durch eine Schweißmutter, eine Gewindeplatte oder ähnlich geeignete Mittel bereitgestellt werden.

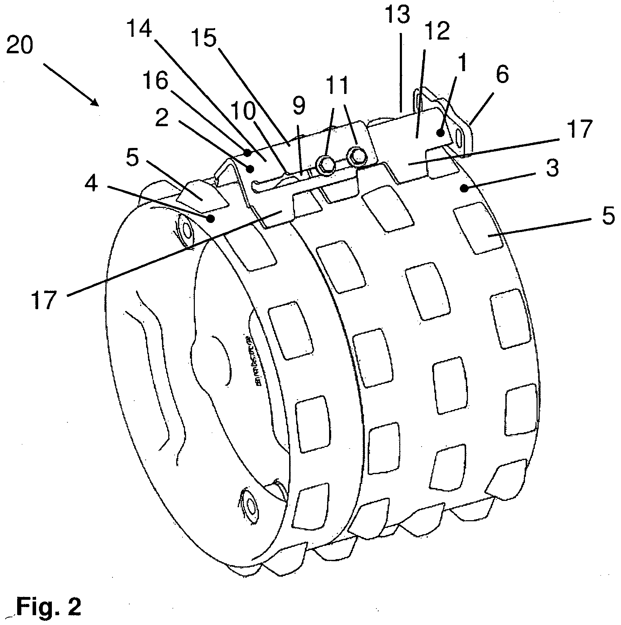

Fig. 2 zeigt die Bandage 20 mit montierter Bandagenverbreiterung 4 aus Fig. 1, wobei der zweite Abstreifkörper 2 in einer Außenposition zur Reinigung der Bandagenverbreiterung 4 angeordnet ist. Die vier Schrauben 11 der Fig. 1 sind nun montiert und fixieren den zweiten Abstreifkörper 2 auf dem ersten Abstreifkörper 1. In der dieser Arbeitsposition ist der zweite Abstreifkörper 2 teilweise oberhalb des ersten Abstreifkörpers 1 und teilweise neben dem ersten Abstreifkörper 1 angeordnet.

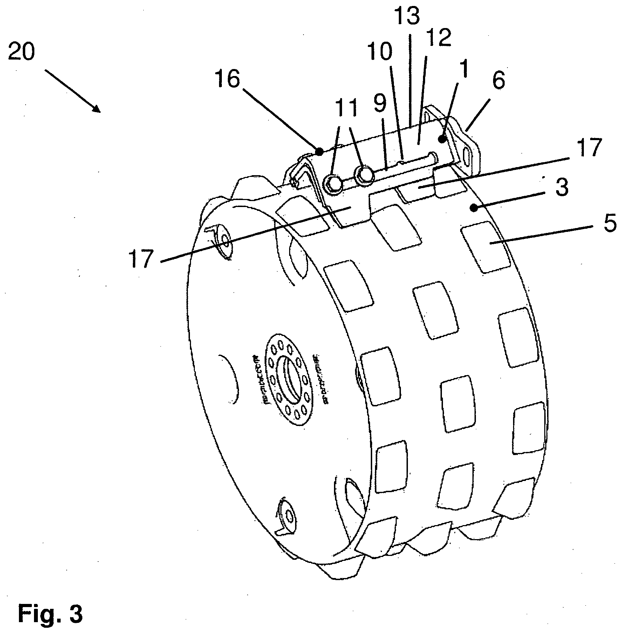

Fig. 3 zeigt die Bandage 20 aus Fig. 1, bei der die Bandagenverbreiterung 4 demontiert ist. Der zweite Abstreifkörper 2 ist hierbei mit den vier Schrauben 11 auf dem ersten Abstreifkörper 1 fixiert, so dass der erste und der zweite Abstreifkörper 1, 2 nahezu deckungsgleich übereinander angeordnet sind. Da der erste Abstreifkörper 1 pro Schenkel zwei Abstreifzähne 17 aufweist, überdeckt sich der eine Abstreifzahn 17 an jedem Schenkel des zweiten Abstreifkörpers 2 mit einem Abstreifzahn 17 des ersten Abstreifkörpers 1 während der zweite Abstreifzahn 17 des ersten Abstreifkörpers 1 unverdeckt bleibt. Um von der äußeren Position des zweiten Abstreifkörpers 2 der Fig. 2 zu einer inneren Position des zweiten Abstreifkörpers 2 der Fig. 3 zu gelangen, genügt es, die vier Schrauben 11 zu lösen, ohne dass sie entfernt werden müssen. Die Schrauben 11 können von der ersten Position in die zweite Position innerhalb des Langlochs oder der Langöffnung 9 geführt werden, ohne dass der zweite Abstreifkörper 2 von dem ersten Abstreifkörper 1 gelöst werden muss. Dies ist durch die Positioniernuten 10 möglich, da diese einen Raum zum Abheben des zweiten Abstreifkörpers 2 vom ersten Abstreifkörpers 1 bieten, ohne dass die Schrauben 11 entfernt werden müssen. Auf diese Weise kann der zweite Abstreifkörper 2 über die Vorsprünge 5 verschoben werden. Dies ist besonders vorteilhaft, wenn die Bandagenverbreiterung 4 versetzt zu der Bandagenoberfläche 3 so angeordnet ist, dass Vorsprünge 5 beim Verschieben des zweiten Abstreifkörpers 2 von einer ersten Position zu einer zweiten Position den Weg verhindern. Auch ist nicht immer gewährleistet, dass die Bandage 20 mit Bandagenverbreiterung 4 nach ihrer Rotation in einer günstigen Position zum Verschieben des zweiten Abstreifkörpers 2 zum Stillstand kommt. Mit Hilfe der Kombination von Langloch 9 und Positioniernuten 10 ist ein Verschieben des zweiten Abstreifköpers 2 möglich ohne eine Demontage der Befestigungsmittel 11.

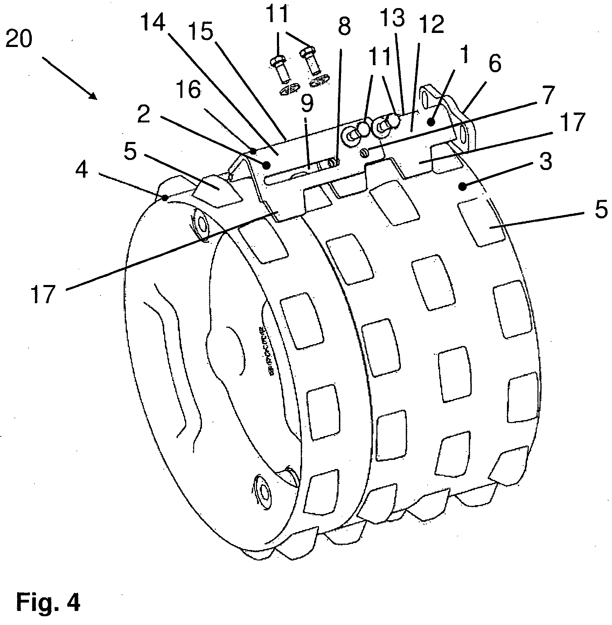

Fig. 4 zeigt ein zweites Ausführungsbeispiel einer Bandage 20 mit montierter Bandagenverbreiterung 4 und einer Abstreifvorrichtung in Explosionsdarstellung. Im Vergleich zu Fig. 1 weist der zweite Abstreifkörper 2 ein Langloch 9 ohne Positioniernuten 10 und ein Rundloch 7 auf. Der erste Abstreifkörper 1 weist wie in Fig. 1 an seinen Schenkeln 12, 13 jeweils zwei Rundöffnungen 8 mit Gewinden auf. Die äußere Rundöffnung 8, in Fig. 4 die linke Rundöffnung 8, des ersten Abstreifkörpers 1 und das innere Ende des Langlochs 9 des zweiten Abstreifkörpers 2 ergeben in ihrer Überdeckung die äußere Position des zweiten Abstreifkörpers 2. Das innere rechte Ende des Langloches 9 dient in diesem Fall als Anschlag und Positionierhilfe, wobei die Rundöffnungen 7, 8 der Fixierung des zweiten Abstreifkörpers 2 auf dem ersten Abstreifkörper 1 in der erreichten Position dienen. In dieser Position überdecken sich das Rundöffnung 7, des zweiten Abstreifkörpers 2 mit der inneren Rundöffnung 8 des ersten Abstreifkörpers 1 und zusätzlich das rechte Ende des Langlochs 9 mit der äußeren Rundöffnung 8 des ersten Abstreifkörpers 1.

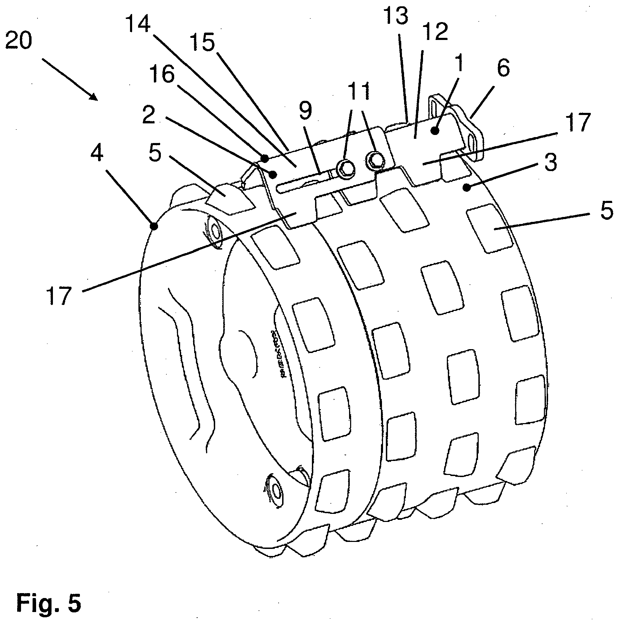

Fig. 5 zeigt die Bandage 20 mit montierter Bandagenverbreiterung aus Fig. 4, wobei die vier Schrauben 11 beidseitig des zweiten Abstreifkörpers 2 jeweils in Rundöffnungen 8 des ersten Abstreifkörpers 1 eingreifen. Diese Rundöffnungen 8 sind in Fig. 4 sichtbar und in Fig. 5 durch die montierten Schrauben 11 verdeckt dargestellt.

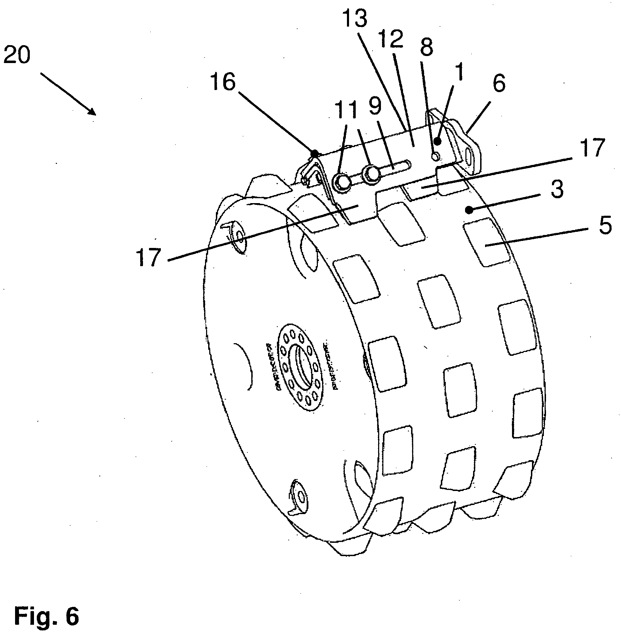

Fig. 6 zeigt die Bandage 20 aus Fig. 4, bei der die Bandagenverbreiterung 4 demontiert ist. Hierbei ist der zweite Abstreifkörper 2 auf dem ersten Abstreifkörper 1 mit den vier Schauben der Fig. 5 in seiner inneren Position fixiert. Die beiden Schrauben 11 auf jedem Schenkel sind jeweils in der Langöffnung 9 angeordnet und greifen jeweils in eine Rundöffnung 8, sichtbar in Fig. 4, des ersten Abstreifkörpers 1 ein.

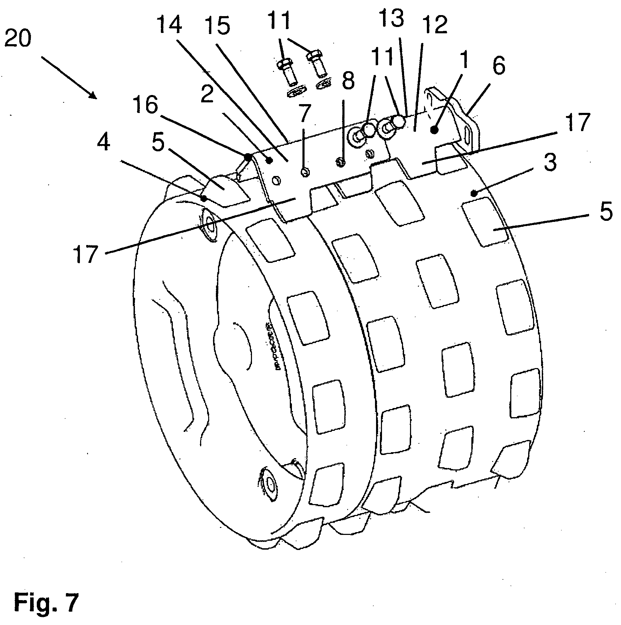

Fig. 7 zeigt ein drittes Ausführungsbeispiel einer Bandage 20 mit montierter Bandagenverbreiterung 4 und mit einer Abstreifvorrichtung in Explosionsdarstellung. Im Vergleich zu Fig. 1 weist der zweite Abstreifköper 2 an jeweils einem Schenkel vier Rundöffnungen 7 zur Aufnahme von zwei Schrauben 11 auf. Die vier Rundöffnungen 7 sind in einer Reihe nebeneinander in Längsrichtung des zweiten Abstreifkörpers 2 angeordnet. Ferner weist der erste Abstreifkörper 1 zwei Rundöffnungen 8 mit Innengewinde auf, die im gleichen Abstand zueinander angeordnet sind wie die Rundöffnungen 7 am zweiten Abstreifkörper 2. Es sind vier Schrauben 11 vorgesehen, um die beiden Abstreifkörper 1, 2 miteinander zu fixieren, wobei die Rundöffnungen 7 des zweiten Abstreifkörpers 2 und die Rundöffnungen 8 des ersten Abstreifkörpers 1 miteinander in Überdeckung gebracht werden.

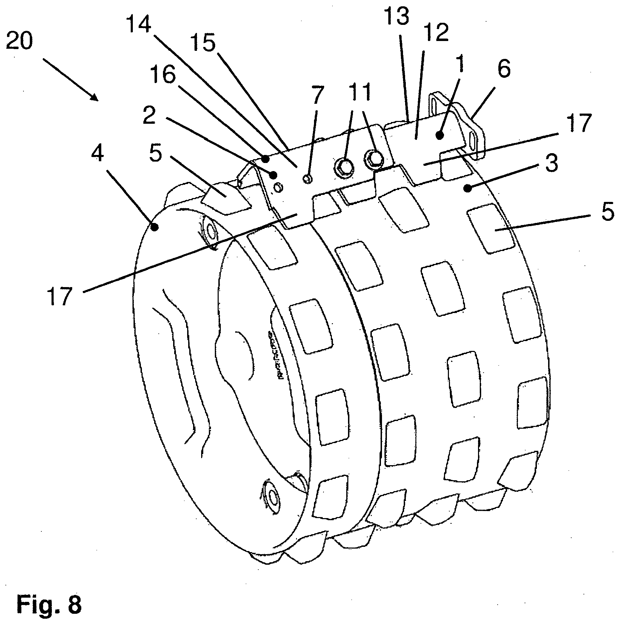

Fig. 8 zeigt die Bandage 20 mit montierter Bandagenverbreiterung 4 aus Fig. 7, wobei die vier Schrauben 11 beidseitig des zweiten Abstreifkörpers 2 jeweils in die Rundöffnungen 8 des ersten Abstreifkörpers 1 eingreifen und den zweiten Abstreifköper 2 in seiner äußeren Position fixieren.

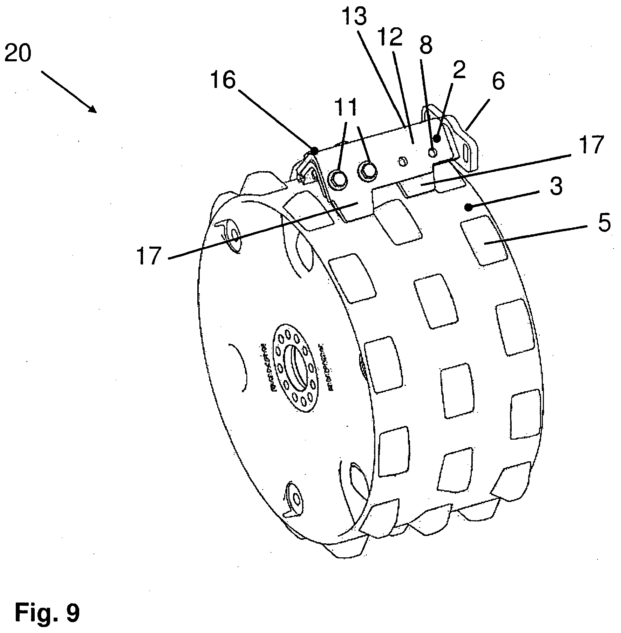

Fig. 9 zeigt die Bandage 20 aus Fig. 7, bei der die Bandagenverbreiterung 4 demontiert ist. Hierbei ist der zweite Abstreifkörper 2 auf dem ersten Abstreifkörper 1 mit den vier Schauben 11 in seiner inneren Position fixiert, wobei die Schrauben 11 in den beiden äußeren Öffnungen der Schenkel 14, 15 angeordnet sind.

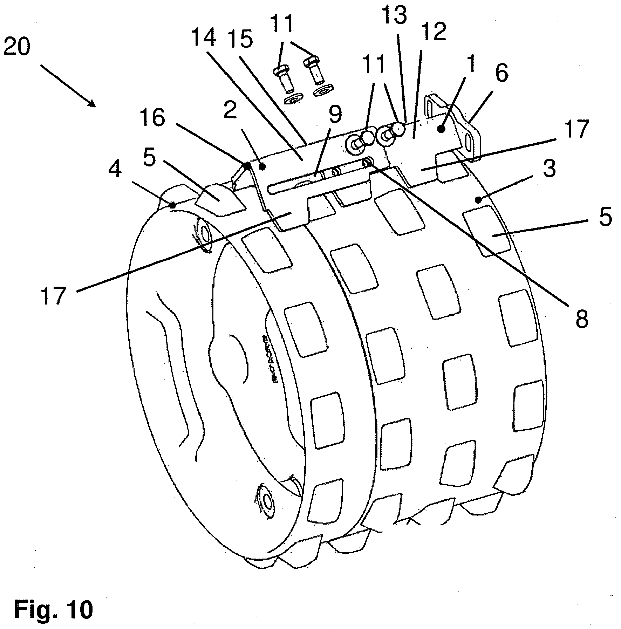

Fig. 10 zeigt ein drittes Ausführungsbeispiel einer Bandage 20 mit montierter Bandagenverbreiterung 4 und einer Abstreifvorrichtung in Explosionsdarstellung. Im Vergleich zu Fig. 1 weist der zweite Abstreifkörper 2 eine Langöffnung 9 ohne Positionierungsnuten 10 auf. Im Vergleich zu Fig. 4 ist die Langöffnung 9 in Längsrichtung des zweiten Abstreifkörpers 2 länger ausgestaltet, so dass die beiden äußeren Enden der Langöffnung 9 als Positionierhilfen dienen. Der zweite Abstreifkörper 2 weist hierbei auf jeweils einem Schenkel 14, 15 eine Langöffnung 9 auf. Der erste Abstreifkörper 1 weist an jedem Schenkel zwei Rundöffnungen 8 mit einem Innengewinde auf wie in Fig. 1. Die Begrenzung des Langlochs 9 am zweiten Abstreifkörper 2 wird als Anschlag verwendet, so dass wenigstens eine Schraube 11 leicht positionierbar ist. Diese Positionierung bezieht sich in Fig. 10 auf die innere Schraube 11 am ersten Schenkel 14 und die innere Schraube 11 am zweiten Schenkel 15 des zweiten Abstreifkörpers 2.

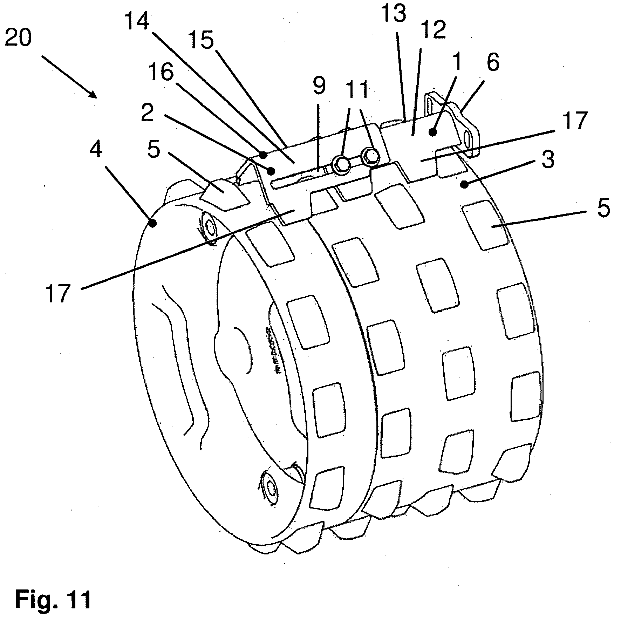

Fig. 11 zeigt die Bandage 20 mit montierter Bandagenverbreiterung 4 aus Fig. 10. Eine erste Schraube 11, in Fig. 11 die innere rechte Schraube 11, greift in die Rundöffnung 8 des ersten Abstreifkörpers 1, sichtbar in Fig. 10, ein und ist gleichzeitig am inneren Ende der Langöffnung 9 positioniert. Die zweite Schraube 11 auf dem ersten Schenkel 14 des zweiten Abstreifkörpers 2 greift durch die Öffnung des Langlochs 9 hindurch in eine zweite Rundöffnung 8 des ersten Abstreifkörpers 1 ein. Die gleiche Anordnung der Schrauben 11 ist auf dem zweiten Schenkel 15 des zweiten Abstreifkörpers 2 zu finden. Auf diese Weise wird der zweite Abstreifköper 2 in seiner äußeren Position am ersten Abstreifkörper 1 fixieren.

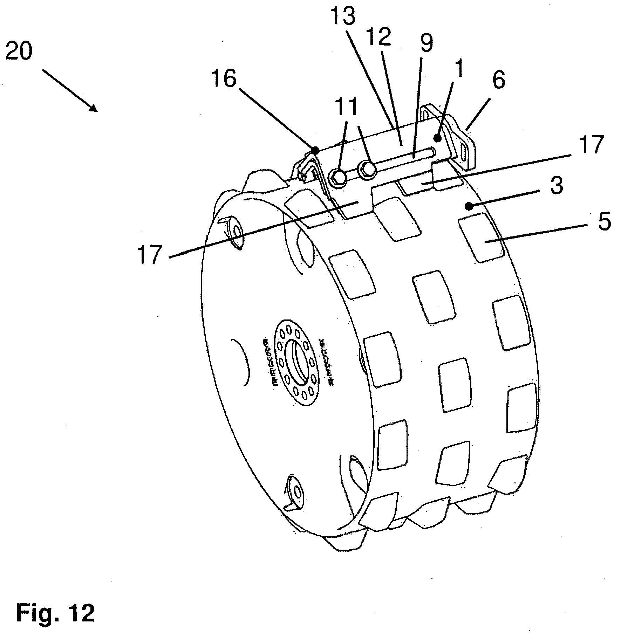

Fig. 12 zeigt das vierte Ausführungsbeispiel der Fig. 10 mit demontierter Bandagenverbreiterurig 4, wobei der zweite Abstreifkörper 2 den ersten Abstreifköper 1 vollständig abdeckt. Hierbei sind beide Schrauben 11 jeweils in die beiden Rundöffnungen 8 des ersten Abstreifkörpers 1, gezeigt in Fig. 10, geführt und in deren Innengewinde jeweils fixiert. Gleichzeitig befindet sich die eine Schraube 11 am äußeren Ende der Langöffnung 9 des zweiten Abstreifkörpers 2 und eine weitere Schraube 11 in einem mittleren Bereich der Langöffnung 9, wobei der Abstand der beiden Schrauben 11 auf einem Schenkel 14, 15 durch den Abstand der beiden Rundöffnungen 8 des ersten Abstreifkörpers 1 vorbestimmt ist.

In weiteren Ausführungsbeispielen kann vorgesehen werden, dass die Abstreifvorrichtung aus mehr als zwei Abstreifkörpern gebildet wird, beispielsweise aus drei oder vier Abstreifkörpern. Diese Abstreifkörper können kaskadenartig an einem fixierten Abstreifkörper verschiebbar gelagert sein. Ferner kann vorgesehen werden, dass mehr als ein Abstreifzahn 17 an einem Schenkel 14, 15 des zweiten Abstreifkörpers 2 angeordnet ist. Dies ist beispielsweise vorteilhaft, wenn die Bandagenverbreiterung 4 mehr als eine Reihe Vorsprünge 5 aufweist oder wenn die Bandagenverbreiterung 4 einen außen liegenden Umfangsbereich aufweist, der angrenzend zu Vorsprüngen 5 eine weitere zu reinigende Umfangsfläche aufweist. Ferner kann vorgesehen werden, dass mit weniger als vier Schrauben 11 eine Fixierung der Abstreifkörper 1, 2 zueinander vorgenommen wird, beispielsweise eine Schraube 11 an jedem Schenkel der Abstreifvorrichtung. Auch kann vorgesehen werden, dass der zweite Abstreifkörper 2 mit seinen Abstreifzähnen 17 in ausgefahrener Position sowohl Zwischenräume auf der Bandage 3 wie auch Zwischenräume auf der Bandagenverbreiterung 4 reinigen kann.

## Patentansprüche

1. Abstreifvorrichtung für eine Bandage (20) einer Bodenverdichtungswalze, insbesondere Abstreifvorrichtung für eine Bandage (20) einer Grabenwalze, wobei die Abstreifvorrichtung aufweist
- einen ersten Abstreifkörper (1), der an einer Bandagenoberfläche (3) angeordnet ist,
- wobei die Bandagenoberfläche (3) Vorsprünge (5) aufweist die am Umfang der Bandagenoberfläche (3) angeordnet sind,
- wobei eine Bandagenverbreiterung (4) an der Bandage (20) befestigbar ist,
**dadurch gekennzeichnet, dass**
die Abstreifvorrichtung einen zweiten Abstreifkörper (2) aufweist, der axial verschiebbar auf dem ersten Abstreifkörper (1) angeordnet ist, wobei der zweite Abstreifköper (2) mit mindestens einem Befestigungsmittel (11) auf dem ersten Abstreifkörper (1) fixierbar ist.

2. Abstreifvorrichtung nach Anspruch 1,
**dadurch gekennzeichnet, dass**
das Befestigungsmittel (11) durch den zweiten Abstreifkörper (2) hindurch in den ersten Abstreifköper (1) eingreift.

3. Abstreifvorrichtung nach Anspruch 1 oder Anspruch 2,
**dadurch gekennzeichnet, dass**
das Befestigungsmittel (11) in einer Öffnung am zweiten Abstreifköper (2) angeordnet ist.

4. Abstreifvorrichtung nach Anspruch 3,
**dadurch gekennzeichnet, dass**
die Öffnung eine Langöffnung (9) ist.

5. Abstreifvorrichtung nach Anspruch 4,
**dadurch gekennzeichnet, dass**
die Langöffnung (9) Positioniernuten (10) aufweist.

6. Abstreifvorrichtung nach Anspruch 3,
**dadurch gekennzeichnet, dass**
die Öffnung eine erste Rundöffnung (7) ist.

7. Abstreifvorrichtung nach einem der Ansprüche 1 bis 6,
**dadurch gekennzeichnet, dass**
das Befestigungsmittel (11) in eine zweite Rundöffnung (8) am ersten Abstreifköper (1) eingreift.

8. Abstreifvorrichtung nach einem der Ansprüche 1 bis 7,
**dadurch gekennzeichnet, dass**
der erste Abstreifkörper (1) einen ersten Schenkel (12) und einen zweiten Schenkel (13) aufweist und der zweite Abstreifkörper (2) einen dritten Schenkel (14) und einen vierten Schenkel (15) aufweist, wobei der dritte Schenkel (14) auf dem ersten Schenkel (12) aufliegt und der vierte Schenkel (15) auf dem zweiten Schenkel (13) aufliegt.

9. Abstreifvorrichtung nach Anspruch 8,
**dadurch gekennzeichnet, dass**
der erste Schenkel (12) und der zweite Schenkel (13) mit dem dritten Schenkel (13) und dem vierten Schenkel (14) eine Führungsgeometrie (16) bilden.

10. Bodenverdichtungswalze, insbesondere Grabenwalze, aufweisend eine Abstreifvorrichtung nach einem der Ansprüche 1 bis 9.

## Claims

1. A stripping device for a drum (20) of a soil compaction roller, in particular a stripping device for a drum (20) of a trench roller, said stripping device comprising
- a first stripping element (1) disposed on a drum surface (3),
- said drum surface (3) being provided with protrusions (5) disposed on the periphery of said drum surface (3),
- a drum extender (4) being provided which is adapted for attachment to said drum (20),
**characterized in that**
said stripping device comprises a second stripping element (2), which is disposed on said first stripping element (1) in an axially movable manner, said second stripping element (2) being adapted for attachment to said first stripping element (1) by means of at least one fixing means (11).

2. The stripping device according to claim 1,
**characterized in that**
said fixing means (11) passes through said second stripping element (2) and engages said first stripping element (1).

3. The stripping device according to claim 1 or claim 2,
**characterized in that**
said fixing means (11) is disposed in an orifice on said second stripping element (2).

4. The stripping device according to claim 3,
**characterized in that**
said orifice is an elongated orifice (9).

5. The stripping device according to claim 4,
**characterized in that**
said elongated orifice (9) has positioning notches (10).

6. The stripping device according to claim 3,
**characterized in that**
said orifice is a first round orifice (7).

7. The stripping device according to any one of claims1 to 6,
**characterized in that**
said fixing means (11) engages a second round orifice (8) on said first stripping element (1).

8. The stripping device according to any one of claims 1 to 7,
**characterized in that**
said first stripping element (1) has a first limb (12) and a second limb (13) and said second stripping element (2) has a third limb (14) and a fourth limb (15), said third limb (14) resting on said first limb (12) and said fourth limb (15) resting on said second limb (13).

9. The stripping device according to claim 8,
**characterized in that**
said first limb (12) and said second limb (13) form a guiding geometry (16) together with said third limb (13) and said fourth limb (14).

10. A soil compaction roller, in particular a trench roller, comprising a stripping device according to any one of claims 1 to 9.

## Revendications

1. Dispositif de raclage pour un cylindre (20) d'un rouleau de compactage du sol, en particulier dispositif de raclage pour un cylindre (20) d'un rouleau de compactage de tranchée, ledit dispositif de raclage comprenant:
- un premier élément de raclage (1) disposé sur une surface (3) du cylindre,
- ladite surface (3) du cylindre étant pourvue de saillies (5) disposées sur la périphérie de ladite surface (3) du cylindre,
- une extension (4) du cylindre étant présente qui est adaptée pour une fixation audit cylindre (20),
**caractérisé en ce que**
ledit dispositif de raclage comprend un second élément de raclage (2) qui est disposé sur ledit premier élément de raclage (1) de manière axialement mobile, ledit second élément de raclage (2) étant adapté pour une fixation audit premier élément de raclage (1) au moyen d'au moins un moyen de fixation (11).

2. Dispositif de raclage selon la revendication 1,
**caractérisé en ce que**
ledit moyen de fixation (11) traverse ledit second élément de raclage (2) et engage ledit premier élément de raclage (1).

3. Dispositif de raclage selon la revendication 1 ou la revendication 2,
**caractérisé en ce que**
ledit moyen de fixation (11) est disposé dans un orifice situé sur ledit second élément de raclage (2).

4. Dispositif de raclage selon la revendication 3,
**caractérisé en ce que**
ledit orifice est un orifice oblong (9).

5. Dispositif de raclage selon la revendication 4,
**caractérisé en ce que**
ledit orifice oblong (9) comporte des encoches de positionnement (10).

6. Dispositif de raclage selon la revendication 3,
**caractérisé en ce que**
ledit orifice est un premier orifice circulaire (7).

7. Dispositif de raclage selon l'une quelconque des revendications 1 à 6,
**caractérisé en ce que**
ledit moyen de fixation (11) engage un second orifice circulaire (8) sur ledit premier élément de raclage (1).

8. Dispositif de raclage selon l'une quelconque des revendications 1 à 7,
**caractérisé en ce que**
ledit premier élément de raclage (1) possède un premier membre (12) et un deuxième membre (13), et ledit second élément de raclage (2) possède un troisième membre (14) et un quatrième membre (15), ledit troisième membre (14) reposant sur ledit premier membre (12) et ledit quatrième membre (15) reposant sur ledit deuxième membre (13).

9. Dispositif de raclage selon la revendication 8,
**caractérisé en ce que**
ledit premier membre (12) et ledit deuxième membre (13) forment une géométrie de guidage (16) avec ledit troisième membre (13) et ledit quatrième membre (14).

10. Rouleau de compactage du sol, en particulier rouleau de compactage de tranchée, comprenant un dispositif de raclage selon l'une quelconque des revendications 1 à 9.
